# EUROPEAN PATENT SPECIFICATION

(11) **EP 1 723 053 B1**
(45) Date of publication and mention of the grant of the patent: **23.07.2008**
(21) Application number: 05717308.0
(22) Date of filing: 01.03.2005
(51) Int. Cl.: B65D 90/02

(54) **A METHOD OF MANUFACTURING AN LNG STORAGE TANK OR THE LIKE AND AN ALUMINIUM LNG STORAGE TANK MANUFACTURED USING THE METHOD**
VERFAHREN ZUM HERSTELLEN EINES LNG-SPEICHERTANKS ODER DERGLEICHEN UND UNTER VERWENDUNG DES VERFAHRENS HERGESTELLTER ALUMINIUM-LNG-SPEICHERTANK
PROCEDE POUR FABRIQUER UN RESERVOIR DE STOCKAGE DE GAZ NATUREL LIQUIDE OU SIMILAIRE ET RESERVOIR DE STOCKAGE DE GNL EN ALUMINIUM FABRIQUE SELON CE PROCEDE

(30) Priority: 10.03.2004 FI 20040382
(43) Date of publication of application: 22.11.2006
(73) Proprietor: Aker Yards Oy, 20240 Turku (FI)
(72) Inventor: GUSTAFSSON, Jukka, 23100 Mynämäki (FI); TÖRMÄ, Matti, 20880 Turku (FI)
(74) Representative: Gustafsson, Aulis Valdemar
(86) International application number: PCT/FI2005/050054
(87) International publication number: WO 2005/085099

(56) References cited:
- EP-A- 0 689 897
- DE-U1- 9 102 881
- GB-A- 1 409 265
- US-A- 3 246 789
- US-A- 3 719 302

## Description

The present invention relates to a method of manufacturing an LNG storage tank and an LNG storage tank, in which the method has been applied. An LNG storage tank is disclosed in US-A-3,246,789.

In order to store and transport liquefied natural gas in ships, membrane tanks supported by the hull structure of the ship or self-supported spherical or prismatic tanks made of aluminium, stainless steel or 9% nickel steel, are usually used. In LNG receiving terminal, the usual preference is for various types and different sizes of usually cylindrical self-supported tanks or membrane tanks made of 9% nickel steel or stainless steel. Self-supported nickel steel tanks are heavy, so there's a tendency to optimise the structures by using thinner structures, whereby weldability is a problem, especially weldng shrinkage. In practice, it is necessary to use internal support structures in a prismatic tank, making the structure complicated and adding costs. When applying known solutions, a large part of the work will have to be carried out on-sitc at the installation site, making the manufacturing more difficult, increasing both completion time and manufacturing costs.

Due to the very low temperatures of cryogenic liquefied gases, such as typically ethylene (LEG) - 103°C or natural gas (LNG) - 163°C, the dimensioning accuracy and quality demands of the joints are emphasised in the manufacture of the tank. The manufacture of the tank consists of a number of cutting, assembly and welding steps for various parts. Each cutting and assembly step has its own specific accuracy due to its work process. The accumulation of form errors has been found to start already at the form deviations of the materials. Dimension deviations are cumulatively formed in each work step. The accuracy of the cutting work can be improved to a certain degree by carefully and regularly servicing the machines and by monitoring their quality development, but the result depends on the used cutting method in addition to the age and design of the machines. In welding, the input of heat caused by are welding causes shrinkage, which cause considerable dimension accuracy errors and transformations with the methods currently in use and especially in aluminium structures, the heat conductivity of which is great.

The level deviations formed in previous work steps are removed in transformation rectification work. The rectification in steel structures is based on causing shrinkage and performed using heat. The properties of the materials used for demanding applications, such as LNG tanks, can deteriorate in heat treatment, whereby heat rectification is either totally forbidden or it may be used only in carefully determined conditions. The caused local shrinkage have a shrinking effect on the whole assembly and cause an uncontrolled loss of dimension accuracy and thereby considerable error costs. The transformations of aluminium structures are multifold in comparison with steel and straightening is difficult. All in all, improving the dimension accuracy has been found to be the largest single method of improving productivity and profitability.

The aim of the invention is to produce a new, improved method of producing a tank for storing liquefied natural gas (LNG) or other such cryogenic medium, in which method the savings potential related to error costs as well as clarity and simplicity of structures has been taken into account so that it allows an advantageous assembly, considerably reducing the total lead time of the manufacture and industrial production having less expensive costs. The aim is to provide a manufacturing method suitable specially for large tanks, the volume of which can, for example, be 100.000 m3 or more.

The aim of the invention can be achieved as disclosed in claim 1 and as described in more detail in other claims. According to the invention, the tank is produced at least mainly from prefabricated construction elements of few different types so that plane elements to be used as cover panels for the tank are produced, the elements being manufactured by mechanically extruding profile elements comprising a plane part and a stiffening part and which are welded to each other by their plane parts by friction welding, the plane elements thus produced being provided with longitudinal and/or transverse stiffeners manufactured by mechanically extruding profile elements which are welded to each other by friction welding and that the plane elements thus produced are connected to each other and/or to separately manufactured edge and/or corner elements as self-supporting volume units having at least four sides.

In a method according to the invention the prefabricated basic parts are thus produced by mechanically extruding as far as possible, whereby the dimensional accuracy of the parts is optimised. Thus, friction welding can be used for connecting these into larger assemblies as extensively as possible, whereby also the input of heat and the heat tensions caused thereby can be effectively minimised.

Due to its modularity, the tank type according to the invention is excellently suitable for a factory-like manufacturing process. As the parts are assembled in steps into larger assemblies and further to volume units of desired size to be installed into each other, they can be manufactured already at the factory in better, more controlled conditions. This is suitable for reducing costs and improving the lead times of the manufacturing.

By producing the construction units from aluminium or the like the weight of the structures can be reduced, which makes the pieces easier to transport and essentially reduces the costs of a ready unit. According to preliminary dimensioning calculations a self-supporting aluminium tank of similar size is about 30 % lighter than a corresponding tank made from 9% nickel steel or stainless steel.

One or more volume units are chosen for forming a tank of desired size, the units being arranged one after the other and attached to each other.

In practice, the prefabricated construction elements are accurately machined to correct dimensions and the ends of the plane elements and the profiles are bevelled for forming a correct and accurate welding groove, preferably by machining with a shape cutter for achieving as great a dimensioning accuracy as possible.

The extruded profile elements of the plane elements are preferably made symmetrical in relation to the normal plane of the plane portion and that their stiffening portion is T-formed in cross-section. Thus, the profile elements can preferably be used in any point of the construction. Additionally, the dimensions of the profile element are changed depending on the place the plane element is planned to be located at in the ready tank.

Separate corner and edge elements are preferably made from rolled plate bent into the shape and dimensions of the desired radius.

The advantages of the invention are most obvious in considerably large structures.

Thus, a plane element used in the shell structure and splash bulkheads is dimensioned so that its size is about 16 x 16 metres, considering the machine and transport points of view.

If volume units are connected to each other in order to produce a tank having a larger volume, a splash bulkhead produced from extruded profile using friction welding is placed between the units, the bulkhead comprising a number of openings connecting the adjacent volume units.

The invention also relates to a aluminium tank or the like suitable for storing LNG or the like medium in very low temperatures, typically in the order of - 163°C, the basic form of the tank corresponding to a rectangular prism. An LNG storage tank according to the invention is disclosed in claim 9. According to the invention, the tank is produced at least mainly from prefabricated structure elements of relatively few different types, the elements including plane elements to be used as shell elements of the tank produced by mechanically extruding aluminium profile elements or the like, the elements including a plane portion and a stiffening portion and which are welded to each other by their plane portions by using friction welding. The plane elements thus produced are provided with longitudinal and/or transverse stiffeners, produced by mechanically extruding aluminium profile elements or the like, welded to each other by using friction welding. Thus produced, the plane elements having stiffeners are connected to each other and/or to separately produced edge and/or corner elements as self-supporting volume units having at least four sides.

For forming a tank of desired size, one or more volume units are arranged one after the other and connected to each other. When the tank is formed of a number of prefabricated self-supporting volume units arranged one after the other, they are most preferably separated from each other by means of a splash bulkhead. The tank is additionally provided with means, for example with a tube tower known as such, for filling and emptying the tank.

As far as the manufacture of the tank is concerned, it is preferable that the extruded profile elements of the plane elements are symmetrical in cross-section in relation to the normal plane of the plane part and that the stiffener part is T- or I-shaped in cross-section.

In the following the invention is described by way of example and with reference to the appended schematic drawings, of which
- figure 1 shows the manufacture and assembly of the basic elements of an LNG tank according to the invention,
- figure 2 is a partial enlargement II of figure 1,
- figure 3 is a partial enlargement III of figure 1, and
- figure 4 shows assembling the LNG tank from a number of prefabricated volume units to a desired size.

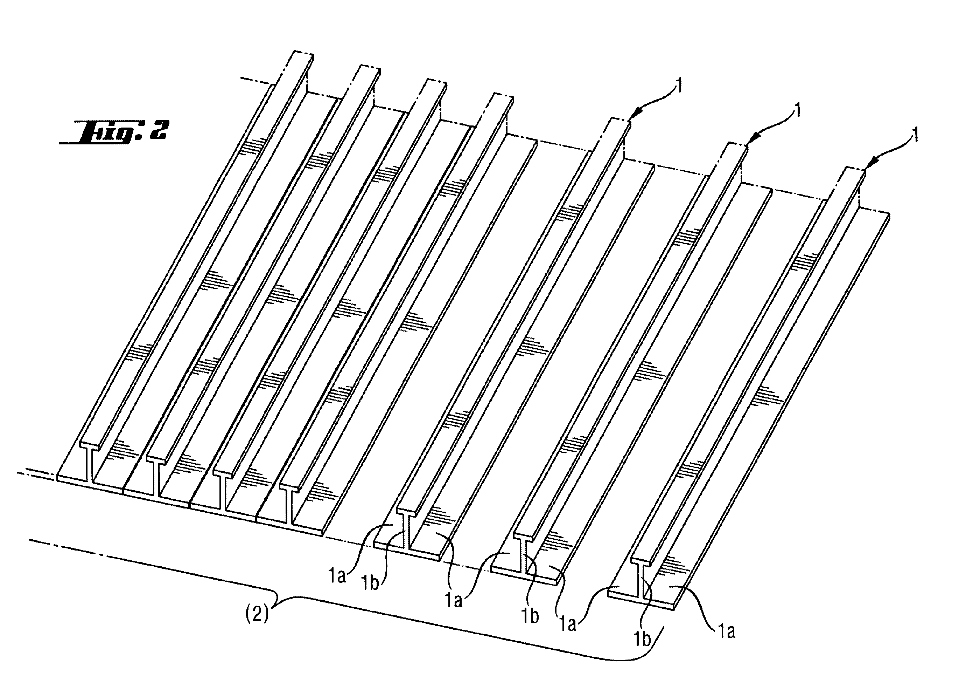

In the drawings, reference number 1 means profile elements produced by mechanically extruding from aluminium or the like, the elements including a plane part la and a stiffener part 1b. Reference number 2 means a plane element used as a shell panel of the tank on various sides thereof and produced by friction welding to each other a number of profile elements 1 as shown in figure 2.

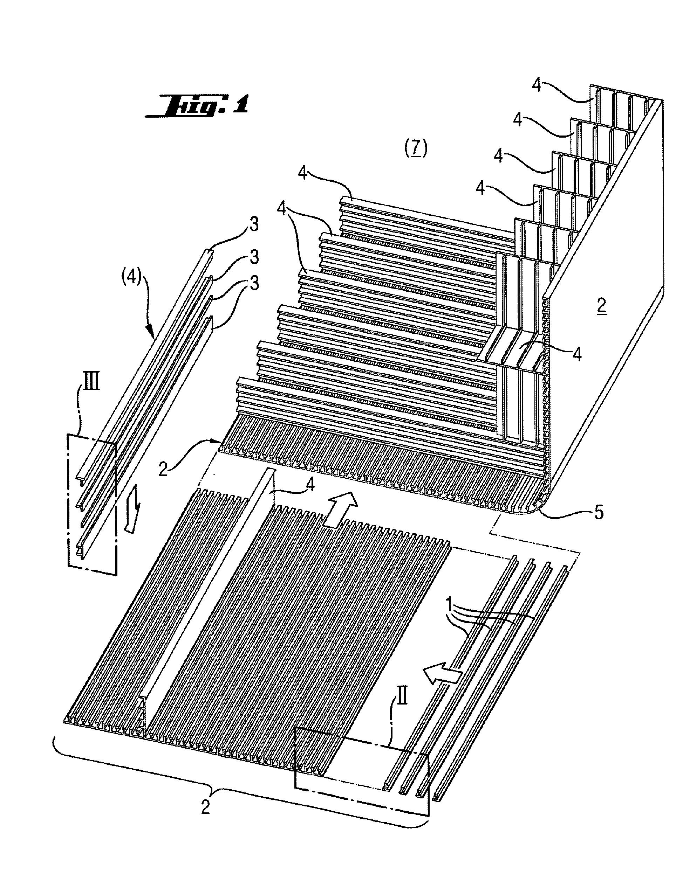

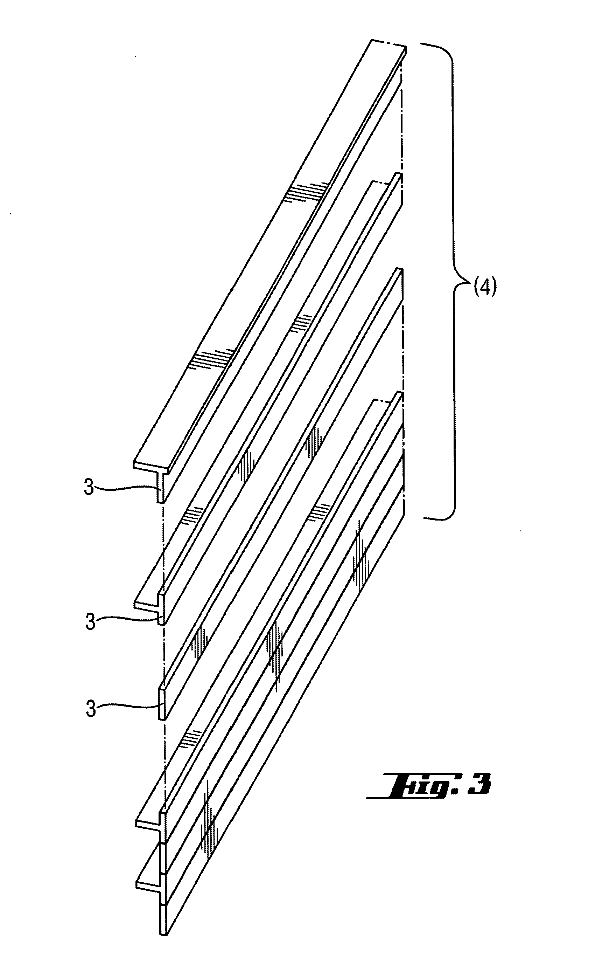

Reference number 4 means stiffeners installed longitudinally or transversely to the plane element as shown in figure 1, the stiffeners being as well produced by friction welding to each other profile elements 3 produced by mechanically extruding, as shown in figure 3. These profile elements can comprise various stiffening portions as well. Stiffeners can refer to vertical, horizontal or longitudinal stiffeners, depending on the installation place of the shell panels 2 having stiffeners 4 in the ready tank.

Reference number 5 means the edge element and reference number 6 means the corner element. In practice, these are made from a rolled plate bent into the shape and dimensions of the desired radius.

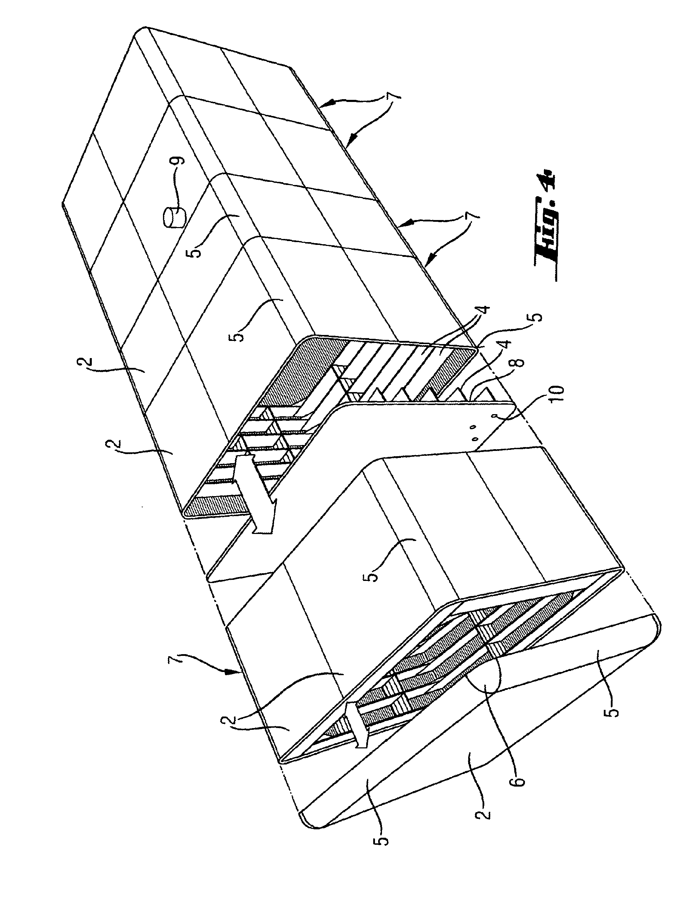

As can be seen in figures 1 and 4, volume units 7 are first assembled from the basic elements. One or more volume units 7 are then chosen for forming a tank of the desired size, the volume units being arranged one after the other and connected to each other. In case the tank comprises more volume units, a splash bulkhead 8 manufactured from extruded profile by using friction welding is installed between them, the bulkhead comprising a number of holes 10 connecting the adjacent volume units. Preferably, the splash bulkhead is also provided with stiffeners.

A volume unit 7 having five sides is located at either end of the tank, with a number of plane elements 2 being provided with the necessary edge and corner elements 5 and 6 for receiving the volume unit. Additionally, at least one of the volume units 7 is provided with means known as such, such as a tube tower 9 or a tube system with its included metering apparatuses and stairs, for filling and emptying the tank.

As can be seen from figure 2, the extruded profile elements 1 of the plane elements are made symmetrical in relation to the normal plane of the plane portion la and their stiffening part 1b is additionally preferably T-shaped in cross section. Depending on the planned installation place in the ready tank of the plane element 2 to be manufactured, the dimensions of the profile element 1 can preferably be varied in the plane of the cross section, because the strength requirements of the different parts of the tank can correspondingly vary.

It is obvious that a tank according to the invention can be used for storing cryogenic liquid, especially LNG, whether the tank be installed on a suitable fixed base or on a movable base, for example a tank to be located on a ship, a barge or the like.

The invention is not limited to the embodiments described here, but a number of modifications thereof can be conceived of within the scope of the appended claims.

## Claims

1. A method of manufacturing a tank suitable for storing very cold cryogenic liquids, such as liquefied ethylene (LEG) or natural gas (LNG) or a corresponding medium, the basic form of the tank corresponding to a rectangular prism and being manufactured from aluminium or the like material, wherein the tank is produced at least mainly from prefabricated structure elements of few different types so that plane elements (2) meant as shell elements are produced by mechanically extruding profile elements (1) including a plane part (1a) and a stiffening part (1b) the stiffening part (1b) extending essentially perpendicular to the plane part (1a) and having a free distal end relative to the plane part (1a), and the profile elements (1) are welded to each other by their plane parts (1a) by using friction welding, and the plane elements (2) hereby produced are provided with longitudinal and/or transverse stiffeners (4) produced by mechanically extruding profile elements (3) which are welded to each other by using friction welding, and that the plane elements (2) having stiffeners (4) are attached to each other and/or to separately produced edge (5) and/or corner elements (6) into self supporting volume units (7) having at least four sides, the said stiffeners (4) extending only partly through the internal space of said volume units (7) between the opposite sides thereof.

2. A method according to claim 1, **characterized in that** in order to form a tank of the desired size one or more volume units (7) are chosen, the volume units being arranged one after the other and connected to each other.

3. A method according to claim 1 or 2, **characterized in that** the prefabricated structure elements are precisely machined to the predetermined dimension and that the ends of the plane elements and the profiles are bevelled for producing a correct and precise welding groove, most preferably by machining with a shape cutter.

4. A method according to any of the preceding claims, **characterized in that** the extruded profile elements (1) of the plane elements (2) are made symmetrical in relation to the normal plane of the plane part (1a) and that their stiffener part (1b) is T- or I-shaped in cross-section.

5. A method according to any of the preceding claims, **characterized in that** the dimensions of the profile element (1) in the cross-section plane are varied according to the planned location of the plane element (2) in the ready tank.

6. A method according to any of the preceding claims, **characterized in that** the edge (5) and corner elements (6) are made from rolled plate bent to the shape and dimensions of the desired radius.

7. A method according to any of the preceding claims, **characterized in that** when attaching the volume units (7) to each other a splash bulkhead (8) produced from extruded profile by using friction welding is installed between them, the splash bulkhead (8) comprising a number of openings (10) connecting the adjacent volume units (7).

8. A method according to claim 7, **characterized in that** the plane element (2) used in the shell construction and splash bulkheads (8) of the volume unit (7) is dimensioned so that it is typically about 16 × 16 metres.

9. An aluminium tank or the like, suitable for storing LNG or the like medium to be stored in very low temperatures, the basic form of the tank corresponding to a rectangular prism and the tank being produced at least mainly from prefabricated construction elements of few different types, the elements including plane elements (2) to be used as shell panels of the tank and being produced of mechanically extruded aluminium profile elements (1), wherein the profile elements (1) include a plane part (1a) and a stiffening part (1b), the stiffening part (1b) extending essentially perpendicular to the plane part (1a) and having a free distal end relative to the plane part (1a), and the profile elements (1) being welded by their plane parts (1a) to each other by means of friction welding to produce the plane elements (2), and the plane elements (2) being provided with longitudinal and/or transverse stiffeners (4) being produced of mechanically extruded aluminium profile elements (3) welded to each other by means of friction welding, and the plane elements (2) having stiffeners (4) being attached to each other and/or to separately produced edge (5) and/or corner elements (6) into self-supporting volume units (7) having at least four sides, the said stiffeners (4) extending only partly through the internal space of said volume units (7) between the opposite sides thereof.

10. A tank according to claim 9, **characterized in that** in order to form a tank of the desired size one or more volume units (7) are arranged one after the other and connected to each other.

11. A tank according to claim 9 or 10, **characterized in that** the tank is formed from a number of prefabricated, self-supporting volume units (7) arranged one after the other, the volume units (7) being separated from each other by a splash bulkhead (8).

12. A tank according to any of claims 9 - 11, **characterized in that** the tank is provided with means known as such, such as a tube tower (9), for filling and emptying the tank.

13. A tank according to any of claims 9 - 11, **characterized in that** the extruded profile elements (1) of the plane elements (2) are symmetrical in cross-section in rotation to the normal plane of the plane part (1a) and that their stiffening part (1b) is T- or I-shaped in cross-section.

## Patentansprüche

1. Verfahren zum Herstellen eines Tanks, der zum Lagern sehr kalter kryogener Flüssigkeiten geeignet ist, wie zum Beispiel für verflüssigtes Ethylen (LEG) oder Erdgas (LNG) oder ein entsprechendes Medium, wobei die Grundform des Tanks einem rechtwinkligen Prisma entspricht und der Tank aus Aluminium oder einem ähnlichen Material gefertigt ist, wobei der Tank zumindest im Wesentlichen aus vorgefertigten Strukturelementen weniger unterschiedlicher Typen hergestellt wird, sodass als Mantelelemente fungierende plane Elemente (2) durch mechanische Extrusion von Profilelementen (1) hergestellt werden, umfassend ein planes Teil (1a) und ein Versteifungsteil (1b), wobei das Versteifungsteil (1b) sich im Wesentlichen rechtwinklig zu dem planen Teil (1a) erstreckt und relativ zu dem planen Teil (1a) ein freies gegenüberliegendes Ende hat, und wobei die Profilelemente (1) unter Anwendung eines Reib-Schweißverfahrens miteinander an ihren planen Teilen (1a) verschweißt werden, wobei die hierdurch hergestellten planen Elemente (2) mit längs liegenden und/ oder quer liegenden Versteifungen (4) versehen werden, die durch mechanische Extrusion von Profilelementen (3) produziert werden, die mittels Reib-Schweißverfahren miteinander verschweißt werden, und wobei die Versteifungen (4) aufweisenden planen Elemente (2) aneinander und/oder an separat hergestellte Ränder- (5) und/oder Eck-Elemente (6) zu selbsttragenden Volumeneinheiten (7) mit mindestens vier Seiten festgelegt werden, wobei sich die Versteifungen (4) nur teilweise durch den Innenraum der Volumeneinheiten (7) zwischen den diesbezüglichen gegenüberliegenden Seiten erstrecken.

2. Verfahren nach Anspruch 1,
**dadurch gekennzeichnet, dass** eine oder mehrere Volumeneinheite(n) (7) gewählt werden, um einen Tank einer gewünschten Größe zu bilden, wobei die Volumeneinheiten nacheinander angeordnet und miteinander verbunden werden.

3. Verfahren nach Anspruch 1 oder 2,
**dadurch gekennzeichnet, dass** die vorgefertigten Strukturelemente exakt auf die vorbestimmten Abmessungen hin gefertigt werden, und dass die Enden der planen Elemente und die Profile zur Erzeugung einer korrekten und genauen Schweißnaht abgefast werden, vorzugsweise mittels Bearbeitung mit einer Formschneid-Vorrichtung.

4. Verfahren nach einem der vorangehenden Ansprüche,
**dadurch gekennzeichnet, dass** die extrudierten Profilelemente (1) der planen Elemente (2) symmetrisch gefertigt sind in Bezug auf die Normalebene des planen Teils (1a), und dass deren Versteifungsteile (1b) im Querschnitt T- oder I-förmig sind.

5. Verfahren gemäß einem der vorangehenden Ansprüche,
**dadurch gekennzeichnet, dass** die Abmessungen des Profilelements (1) in der Querschnittsebene gemäß der geplanten Lokation des planen Elements (2) in dem fertigen Tank variiert werden.

6. Verfahren gemäß einem der vorangehenden Ansprüche,
**dadurch gekennzeichnet, dass** die Rand- (5) und Eck-Elemente (6) aus einer gewalzten Platte gemacht werden, die in ihre Form und in deren Abmessungen nach gewünschtem Radius gebogen werden.

7. Verfahren nach einem der vorangehenden Ansprüche,
**dadurch gekennzeichnet, dass** beim Festlegen der Volumeneinheiten (7) aneinander eine dazwischenliegende Schutz-Trennwand (8) installiert wird, die aus einem extrudierten Profil unter Anwendung eines Reib-Schweißverfahrens hergestellt wird, wobei die Schutz-Trennwand (8) eine Anzahl von Öffnungen (10) aufweist, mit denen die benachbarten Volumeneinheiten (7) verbunden werden.

8. Verfahren nach Anspruch 7,
**dadurch gekennzeichnet, dass** das bei der Mantelkonstruktion und den Schutz-Trennwänden (8) der Volumeneinheit (7) verwendete plane Element (2) so dimensioniert ist, dass es typischerweise ca.16 x 16 m umfasst.

9. Aluminiumtank oder dergleichen, der zur Lagerung von LNG oder dergleichen Medien bei sehr niedrigen Temperaturen geeignet ist, wobei die Grundform des Tanks einem rechtwinkligen Prisma entspricht und der Tank zumindest im Wesentlichen aus vorgefertigten Konstruktionselementen weniger unterschiedlicher Typen hergestellt ist, wobei die Elemente plane Elemente (2) aufweisen, die als Mantelpaneele des Tanks verwendet werden und aus mechanisch extrudierten Aluminium-Profilelementen (1) hergestellt sind, wobei die Profilelemente (1) ein planes Teil (1a) und ein Versteifungsteil (1b) aufweisen, wobei sich das Versteifungsteil (1b) im Wesentlichen rechtwinklig zu dem planen Teil (1a) erstreckt und es relativ zu dem planen Teil (1a) ein freies gegenüberliegendes Ende hat, und wobei die Profilelemente (1) an ihren planen Teilen (1a) aneinander mittels eines Reib-Schweißverfahrens verschweißt sind, um die planen Elemente (2) zu bilden, wobei ferner die planen Elemente (2) mit längs liegenden und/oder quer liegenden Versteifungen (4) versehen sind, die aus mechanisch extrudierten Aluminium-Profilelementen (3) gefertigt sind, die mittels Reib-Schweißverfahrens aneinander geschweißt sind, und wobei die planen Elemente (2) Versteifungen (4) haben, die aneinander und/oder an separat hergestellte Rand- (5) und/oder Eck-Elemente (6) in den selbsttragenden Volumeneinheiten (7) mit mindestens 4 Seiten festgelegt sind, wobei sich die Versteifungen (4) nur teilweise durch den Innenraum der Volumeneinheiten (7) zwischen den gegenüberliegenden Seiten dazwischen erstrecken.

10. Tank gemäß Anspruch 9,
**dadurch gekennzeichnet, dass** zur Bildung eines Tanks der gewünschten Größe eine oder mehrere Volumeneinheiten (7) nacheinander angeordnet und miteinander verbunden sind.

11. Tank gemäß Anspruch 9 oder 10,
**dadurch gekennzeichnet, dass** der Tank aus einer Anzahl vorgefertigter, selbsttragender Volumeneinheiten (7) gebildet ist, die nacheinander angeordnet sind, wobei die Volumeneinheiten (7) voneinander mittels Schutz-Trennwänden (8) separiert sind.

12. Tank nach einem der Ansprüche 9 bis 11,
**dadurch gekennzeichnet, dass** der Tank mit an sich bekannten Mitteln versehen ist, wie beispielsweise einem Rohrstutzen (9), um den Tank zu befüllen und zu entleeren.

13. Tank nach einem der Ansprüche 9 bis 11,
**dadurch gekennzeichnet, dass** die extrudierten Profilelemente (1) der planen Elemente (2) im Querschnitt bezüglich der Normalebene des planen Teils (1a) symmetrisch sind, und dass ihr Versteifungsteil (1b) im Querschnitt T- oder I-förmig ist.

## Revendications

1. Procédé pour fabriquer un réservoir approprié pour stocker des liquides cryogéniques très froids, tels que l'éthylène liquide (LEG) ou du gaz naturel liquide (GNL) ou un milieu correspondant, la forme de base du réservoir correspondant à un prisme rectangulaire et étant fabriqué à partir d'aluminium ou d'un matériau similaire, dans lequel le réservoir est produit au moins principalement à partir d'éléments structurels préfabriqués de quelques types différents de sorte que des éléments plans (2) comme des éléments de coque, sont produits en extrudant mécaniquement des éléments profilés (1) comprenant une partie plane (1a) et une partie de raidissement (1b), la partie de raidissement (1b) s'étendant essentiellement perpendiculairement à la partie plane (1a) et ayant une extrémité distale libre par rapport à la partie plane (1a), et les éléments profilés (1) sont soudés entre eux par leurs parties planes (1a) en utilisant le soudage par friction, et les éléments plans (2) ainsi produits, sont dotés de raidisseurs longitudinaux et/ou transversaux (4) produits en extrudant mécaniquement des éléments profilés (3) qui sont soudés entre eux en utilisant le soudage par friction, et en ce que les éléments plans (2) ayant des raidisseurs (4) sont fixés entre eux et/ou à un bord (5) produit séparément et/ou des éléments de coin (6) dans des unités de volume (7) autoporteuses ayant au moins quatre côtés, lesdits raidisseurs (4) s'étendant uniquement partiellement à travers l'espace interne desdites unités de volume (7) entre leurs côtés opposés.

2. Procédé selon la revendication 1, **caractérisé en ce qu'**afin de former un réservoir avec la taille souhaitée, on choisit une ou plusieurs unités de volume (7), les unités de volume étant disposées l'une après l'autre et raccordées entre elles.

3. Procédé selon la revendication 1 ou 2, **caractérisé en ce que** les éléments structurels préfabriqués sont précisément usinés à la dimension prédéterminée et **en ce que** les extrémités des éléments plans et des profils sont biseautées pour produire une rainure de soudage correcte et précise, de manière préférée entre toutes par usinage avec un dispositif de coupe de forme.

4. Procédé selon l'une quelconque des revendications précédentes, **caractérisé en ce que** les éléments profilés extrudés (1) des éléments plans (2) sont fabriqués selon une relation symétrique par rapport au plan normal de la partie plane (1a) et de sorte que leur partie de raidisseur (1b) a une section transversale en forme de T ou de I.

5. Procédé selon l'une quelconque des revendications précédentes, **caractérisé en ce que** les dimensions de l'élément profilé (1) dans le plan en coupe sont modifiées selon l'emplacement planifié de l'élément plan (2) dans le réservoir prêt.

6. Procédé selon l'une quelconque des revendications précédentes, **caractérisé en ce que** le bord (5) et les éléments de coin (6) sont fabriqués à partir d'une plaque laminée, courbée selon la forme et les dimensions du rayon souhaité.

7. Procédé selon l'une quelconque des revendications précédentes, **caractérisé en ce que** lorsque l'on fixe les unités de volume (7) entre elles, une cloison anti-éclaboussure (8) produite à partir du profilé extrudé en utilisant le soudage par friction, est installée entre elles, la cloison anti-éclaboussure (8) comprenant un certain nombre d'ouvertures (10) raccordant les unités de volume (7) adjacentes.

8. Procédé selon la revendication 7, **caractérisé en ce que** l'élément plan (2) utilisé dans la construction de coque et les cloisons anti-éclaboussure (8) de l'unité de volume (7) est dimensionné de sorte qu'il mesure typiquement environ 16 x 16 mètres.

9. Réservoir en aluminium ou similaire, approprié pour stocker du gaz naturel liquide ou un milieu similaire à stocker à très basses températures, la forme de base du réservoir correspondant à un prisme rectangulaire et le réservoir étant produit au moins principalement à partir d'élément de construction préfabriqué de peu de types différents, les éléments comprenant des éléments plans (2) destinés à être utilisés en tant que panneaux de coque du réservoir et étant produits avec des éléments profilés en aluminium mécaniquement extrudés (1), dans lequel les éléments profilés (1) comprennent une partie plane (1a) et une partie de raidissement (1b), la partie de raidissement (1b) s'étendant essentiellement perpendiculairement à la partie plane (1a) et ayant une extrémité distale libre par rapport à la partie plane (1a) et les éléments profilés (1) étant soudés par leurs parties planes (1a) entre eux au moyen du soudage par friction pour produire les éléments plans (2), et les éléments plans (2) étant prévus avec des raidisseurs longitudinaux et/ou transversaux (4) qui sont produits avec des éléments profilés en aluminium mécaniquement extrudés (3) soudés entre eux au moyen du soudage par friction, et les éléments plans (2) ayant des raidisseurs (4) qui sont fixés entre eux et/ou à un bord (5) produit séparément et/ou des éléments de coin (6) dans les unités de volume autoporteuses (7) ayant au moins quatre côtés, lesdits raidisseurs (4) s'étendant uniquement partiellement à travers l'espace interne desdites unités de volume (7) entre leurs côtés opposés.

10. Réservoir selon la revendication 9, **caractérisé en ce qu'**afin de former un réservoir de la taille souhaitée, une ou plusieurs unités de volume (7) sont disposées l'une après l'autre et raccordées entre elles.

11. Réservoir selon la revendication 9 ou 10,
**caractérisé en ce que** le réservoir est formé à partir d'un certain nombre d'unités de volume autoporteuses préfabriquées (7) disposées l'une après l'autre, les unités de volume (7) étant séparées les unes des autres par une cloison anti-éclaboussure (8).

12. Réservoir selon l'une quelconque des revendications 9 à 11, **caractérisé en ce que** le réservoir est prévu avec des moyens connus tels qu'un pylône tubulaire (9), pour remplir et vider le réservoir.

13. Réservoir selon l'une quelconque des revendications 9 à 11, **caractérisé en ce que** les éléments profilés extrudés
(1) des éléments plans (2) sont symétriques en coupe par rapport au plan normal de la partie plane (1a) et **en ce que** leur partie de raidissement (1b) a une section transversale en forme de T ou de I.
